# EUROPEAN PATENT APPLICATION

(11) **EP 4 485 330 A1**
(43) Date of publication of application: **01.01.2025**
(21) Application number: 24183423.3
(22) Date of filing: 20.06.2024
(51) Int. Cl.: G06Q 30/0601, G06Q 50/04

(54) **ORDER SUPPORT APPARATUS AND ORDER SUPPORT METHOD**

(30) Priority: 28.06.2023 JP 2023106038
(71) Applicant: ASICS Corporation, Kobe-shi, Hyogo 650-8555 (JP)
(72) Inventor: TANIGUCHI, Norihiko, Kobe-shi, Hyogo, 650-8555 (JP); TAKASHIMA, Shingo, Kobe-shi, Hyogo, 650-8555 (JP); HATANO, Genki, Kobe-shi, Hyogo, 650-8555 (JP)
(74) Representative: Stolmár & Partner Patentanwälte PartG mbB

(57) **Abstract**

To provide an order support apparatus and an order support method enabling ordering products based on consideration of impact of manufacturing the products on environment. An order support apparatus 100 includes a request information acquisition unit 110, candidate extraction unit 120, manufacturing condition generation unit 130, and output unit 140. The request information acquisition unit 110 acquires request information of a user relating to a product and manufacture of the product. The candidate extraction unit 120 extracts, based on the request information acquired by the request information acquisition unit 110, candidate sections capable of manufacturing the product, from predetermined manufacturing sections. The manufacturing condition generation unit 130 generates manufacturing conditions of the candidate sections, including environmental indicators relating to impacts of the candidate sections extracted by the candidate extraction unit 120 on environment. The output unit 140 outputs the manufacturing conditions generated by the manufacturing condition generation unit 130.

## Description

### CROSS-REFERENCE TO RELATED APPLICATION

This application claims priority to Japanese Patent Application No. 2023-106038, the disclosures of which are incorporated herein by reference in their entirety.

### BACKGROUND

### Technical field

The present disclosure relates to an order support apparatus and an order support method.

### Background Information

Conventionally, a system is known that receives design information and delivery conditions desired by a user and manufactures a product in accordance with the design information and delivery conditions.

For example, the information processing apparatus described in Japanese Unexamined Patent Application Publication No. 2016-206877 receives design information and a delivery condition desired by a user, and performs matching on the design information and processing equipment to which processing based on the design information is requested. The information processing apparatus then transmits a processing order to a factory having the matched processing equipment, and controls processing of a product and shipping of the product to a delivery destination. In this manner, the information processing apparatus allows for proper communication between a client and a manufacturer.

### SUMMARY

Although the information processing apparatus of Japanese Unexamined Patent Application Publication No. 2016-206877 determines a factory based on consideration of a shape, lead time, price, etc. of a product desired by a user, the information processing apparatus is not based on consideration of efforts to address environmental issues, which have become a concern for many companies and individuals in recent years.

Addressing environmental issues such as carbon dioxide emissions and global warming is an important issue for companies that manufacture products, and is also attracting attention from users who purchase the products.

Therefore, an object of the present disclosure is to provide an order support apparatus and an order support method that enable ordering a product based on consideration of impact of manufacturing the product on environment.

An aspect of the present disclosure provides an order support apparatus that supports ordering a product that is an article of clothing, an article of footwear, or an accessory. The order support apparatus includes a request information acquisition unit, a candidate extraction unit, a manufacturing condition generation unit, and an output unit. The request information acquisition unit acquires request information of a user, that relates to the product and manufacture of the product. The candidate extraction unit extracts, based on the request information acquired by the request information acquisition unit, candidate sections capable of manufacturing the product, from predetermined manufacturing sections. The manufacturing condition generation unit generates manufacturing conditions of the candidate sections, and the manufacturing conditions include environmental indicators relating to an impact of the candidate section extracted by the candidate extraction unit on environment. The output unit outputs the manufacturing conditions generated by the manufacturing condition generation unit.

In this aspect, the manufacturing condition generation unit generates manufacturing conditions of candidate sections capable of manufacturing a product based on request information of a user, and the output unit outputs the manufacturing conditions. Since the manufacturing conditions include environmental indicators, the user can check the manufacturing conditions that include the environmental indicators. As a result, the user can order the product based on consideration of impact of manufacturing the product on environment.

An aspect of the present disclosure provides an order support method executed by an order support apparatus that supports ordering a product being an article of clothing, an article of footwear, or an accessory. The order support method includes a request information acquisition step, a candidate extraction step, a manufacturing condition generation step, and an output step. In the request information acquisition step, request information of a user relating to the product and manufacture of the product is acquired. In the candidate extraction step, candidate sections capable of manufacturing the product are extracted from predetermined manufacturing sections based on the request information acquired in the request information acquisition step. In the manufacturing condition generation step, manufacturing conditions of the candidate sections, including environmental indicators relating to an impact of the candidate section extracted in the candidate extraction step on environment, are generated. In the output step, the manufacturing conditions generated in the manufacturing condition generation step are output.

In this aspect, in the manufacturing condition generation step, manufacturing conditions of candidate sections capable of manufacturing a product based on request information of a user are generated, and in the output step, the manufacturing conditions are output. Since the manufacturing conditions include environmental indicators, the user can check the manufacturing conditions that include the environmental indicators. As a result, the user can order the product based on consideration of impact of manufacturing the product on environment.

### BRIEF DESCRIPTION OF THE DRAWINGS

FIG. 1 is a schematic diagram of a product ordering system 10 according to a first embodiment of the present disclosure.
FIG. 2 is a functional block diagram illustrating functions of an order support apparatus 100 according to the first embodiment of the present disclosure.
FIG. 3 shows an example of request information of a user input using a user terminal 20 in a case where the user is a business entity such as a wholesaler or retailer.
FIG. 4 shows an example of a factory database (DB).
FIG. 5 shows examples of request information of a user and manufacturing conditions of factories extracted based on the request information.
FIG. 6 is a flowchart illustrating an order support method M100 executed by the order support apparatus 100 according to the first embodiment of the present disclosure.
FIG. 7 is a functional block diagram illustrating functions of an order support apparatus 200 according to a second embodiment of the present disclosure.
FIG. 8 illustrates conversion of an actual score (an evaluation value) of a manufacturing condition, into a standardized value, by using a normal distribution based on a desired value and an acceptable (upper limit) value.
FIG. 9 shows an example of request information of a user input using the user terminal 20 in a case where the user is an individual.

### DETAILED DESCRIPTION

Hereinafter, preferred embodiments of the present invention will be described in detail with reference to the accompanying drawings. Note that the embodiments described below are merely specific examples for carrying out the present invention, and are not to be construed as limiting the present invention. To facilitate understanding of the description, a component common to multiple drawings is denoted by the same reference sign whenever possible, and redundant descriptions may be omitted.

### <First Embodiment>

### [Configuration of Product Ordering System]

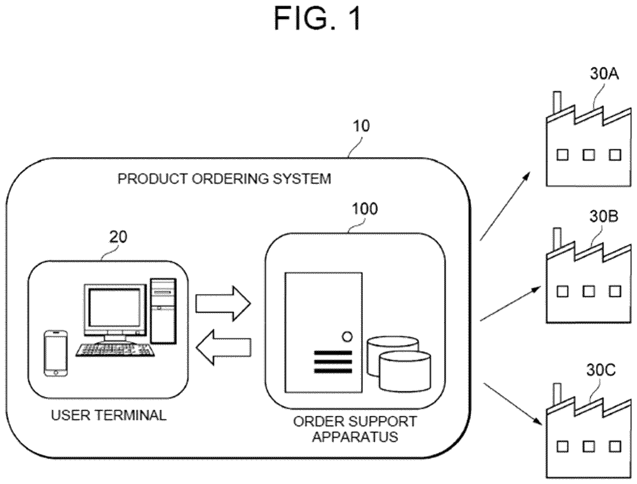

FIG. 1 is a schematic diagram of a product ordering system 10 according to a first embodiment of the present disclosure. As illustrated in FIG. 1, the product ordering system 10 includes a user terminal 20 and an order support apparatus 100. In the present embodiment, an exemplary case where a product ordered by a user is an article of footwear such as shoes will be described, but the product is not limited thereto. For example, a product ordered by a user may include an article of clothing (clothes, socks, hats, etc.), an accessory worn directly or indirectly, a part of such a product (for example, a shoe sole, etc.), and the like.

The user terminal 20 is a terminal through which a user inputs and checks information for ordering a product, and examples of the user terminal 20 include a personal computer, a tablet, and a smartphone.

The order support apparatus 100 is, for example, a server apparatus, and sends and receives data to and from the user terminal 20 via a network such as the Internet. Specifically, the order support apparatus 100 acquires request information from the user terminal 20, generates a manufacturing condition based on the request information, and transmits the manufacturing condition to the user terminal 20. If the order support apparatus 100 receives ordering information from the user terminal 20, the order support apparatus 100 places an order for manufacture of a product, for example, with any one of factories 30A to 30C. In addition, the order support apparatus 100 may include a database that stores data necessary for these processes, or may access an external database. The order support apparatus 100 will be described in detail later.

In response to reception of a product order from the product ordering system 10, the factories 30A to 30C manufacture the product based on the product order.

The products manufactured in the factories 30A to 30C may be delivered to a delivery location specified by the user, for example. The delivery location may be registered in advance by the user, or may be specified by the user using the user terminal 20 each time a product is ordered.

In this manner, the user can use the user terminal 20 in the product ordering system 10 to order and purchase a desired product.

### [Configuration of Order Support Apparatus]

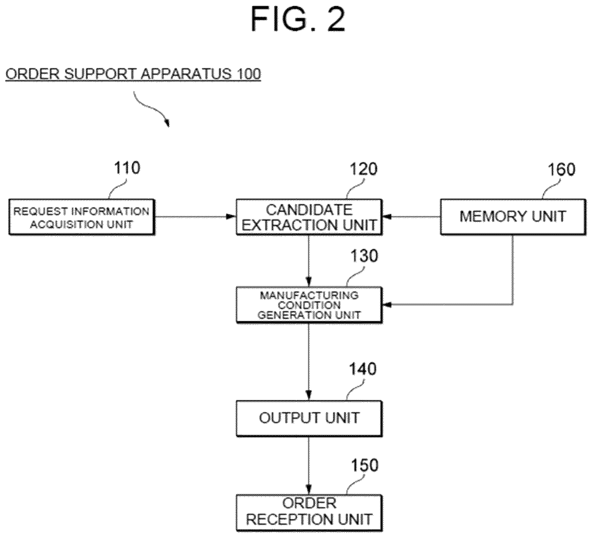

FIG. 2 is a functional block diagram illustrating functions of the order support apparatus 100 according to the first embodiment of the present disclosure. As illustrated in FIG. 2, the order support apparatus 100 includes a request information acquisition unit 110, a candidate extraction unit 120, a manufacturing condition generation unit 130, an output unit 140, an order reception unit 150, and a memory unit 160.

The request information acquisition unit 110 acquires request information of a user relating to a product and manufacture of the product. For example, a user inputs desired shoes and request information relating to manufacture of the shoes using the user terminal 20, and transmits the input information to the order support apparatus 100 via the Internet. Then, the request information acquisition unit 110 acquires the request information.

Here, the request information includes, for example, product information of the shoes, and the product information of the shoes includes a design drawing, a 3D model, a product number, and the like. The request information also includes, for example, manufacturing information of the shoes, and the manufacturing information of the shoes includes materials of the shoes, a processing method, lead time, accuracy, quantity, price, and the like.

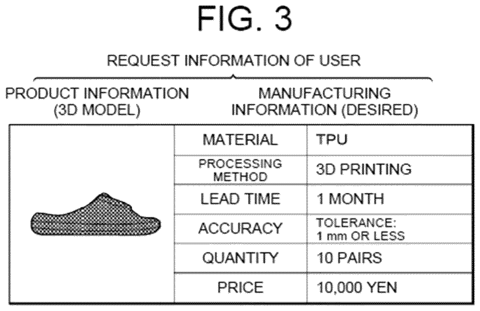

FIG. 3 shows an example of request information of a user input using the user terminal 20 in a case where the user is a business entity such as a wholesaler or retailer. As shown in FIG. 3, the user may input the product information of the shoes by inputting a 3D model or a product number by using the user terminal 20. In addition, the user may input the manufacturing information of the shoes by inputting Thermoplastic Polyurethane resin (TPU) (material), 3D printing (processing method), one month from order (lead time), tolerance: 1 mm or less (accuracy), 10 pairs (quantity), and 10,000 yen (price) by using the user terminal 20. 3D printing is a processing method also known as additive manufacturing or 3D additive manufacturing, in which a 3D printer is used to process a product.

The candidate extraction unit 120 extracts, based on the request information acquired by the request information acquisition unit 110, candidate sections capable of manufacturing the product, from predetermined manufacturing sections. For example, if the request information of the user includes the above-mentioned product information of the shoes (a predetermined product number) and the above-mentioned manufacturing information of the shoes (TPU, 3D printing, etc.), the candidate extraction unit 120 extracts manufacturing sections capable of manufacturing the shoes. That is, the candidate extraction unit 120 at least extracts manufacturing sections that are equipped with 3D printing processing equipment and capable of manufacturing the shoes with the predetermined product number by using TPU as a material.

The manufacturing sections extracted by the candidate extraction unit 120 may include only those that satisfy all the contents of the request information of the user, or may include those that is capable of manufacturing at least the shoes specified by the user, but that do not satisfy all the contents of the request information of the user.

Here, the manufacturing section is typically a factory that manufactures shoes, and information relating to these factories may be stored in advance in the memory unit 160 as, for example, a factory DB.

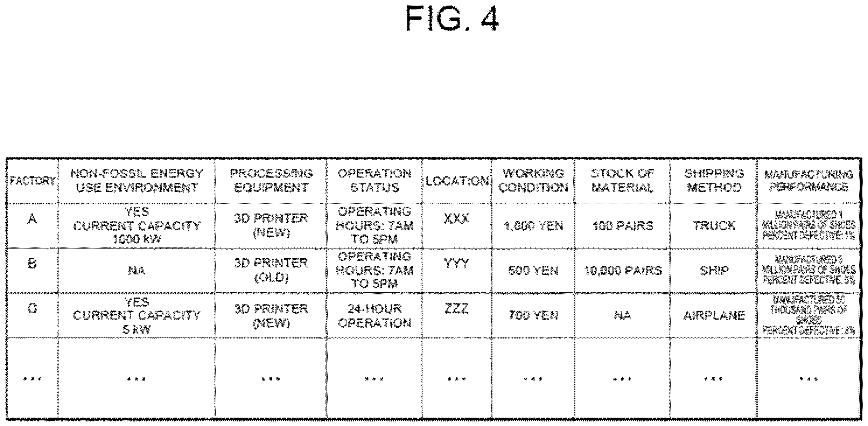

FIG. 4 shows an example of the factory DB. As shown in FIG. 4, the factory DB stores, for each factory, "non-fossil energy use environment", "processing equipment", "operation status", "location", "working condition", "stock of material", "shipping method", and "manufacturing performance".

The "non-fossil energy use environment" may include information regarding energy used in a factory, that is for example, information indicating whether, in the environment, non-fossil energy such as solar, wind, or geothermal energy is used, and (if non-fossil energy is used in the environment) information indicating current capacity. Non-fossil energy is energy that does not depend on fossil resources. Non-fossil energy includes renewable energy and energy from nuclear power generation. Renewable energy includes (1) sunlight, (2) wind power, (3) water power, (4) geothermy, (5) solar heat, (6) heat in atmosphere and other heat present in nature, and (7) biomass (organic matter derived from plants and animals).

The "processing equipment" is information relating to the type and manufacturing capacity of equipment installed in a factory, and may further include information such as an asset value and lease fees.

The "operation status" is information relating to operating hours of a factory, and may further include information relating to a busy period, an off-period, a holiday period, and the like.

The "location" is information relating to location of a factory and the like, and is typically the address of the factory.

The "working condition" is information relating to a wage (a unit cost) and working hours of factory workers. For example, the "working condition" may include a factory worker unit cost and a labor cost to manufacture a pair of shoes.

The "stock of material" is information relating to the stock of materials of shoes. For example, "stock of material" may include the amount of material in stock, or information indicating how many pairs of shoes can be manufactured, or, if there is no stock, may include information indicating time and amount of next arrival.

The "shipping method" is information relating to a means of transport of shoes manufactured at a factory, from the factory to a destination such as a user, an orderer, or a purchaser. For example, the "shipping method" may include a truck, a ship, an airplane, and combinations thereof.

The "manufacturing performance" is information relating to performance of shoe manufacturing at a factory. For example, the "manufacturing performance" may include the total number of shoes manufactured, the percent defective (the rate of returned goods), the number of complaints, an evaluation score, and comments.

In this manner, based on the product information of the shoes (predetermined product number) and the manufacturing information of the shoes (TPU, 3D printing, etc.) included in the request information of the user, the candidate extraction unit 120 refers to the factory DB and extracts, from the pre-registered factories, factories (candidate sections) capable of manufacturing the shoes.

In this example, the information relating to the above items is stored in the factory DB for each of Factory A, Factory B, Factory C, and so on. However, for example, in a case where a single factory has multiple pieces of equipment (production lines) or in a case where different pieces of processing equipment (production methods) are operated or different products are manufactured depending on an operating time zone, each may be treated as a single manufacturing section. That is, in the factory DB, information relating to the above items may be stored for each manufacturing section.

Furthermore, the factory DB may be updated hourly or daily, but is preferably updated in real time. For example, by updating the current capacity of non-fossil energy and the stock of materials in real time, the manufacturing conditions described below can be generated with high accuracy.

Returning to the explanation of FIG. 2, the manufacturing condition generation unit 130 generates manufacturing conditions of the candidate sections extracted by the candidate extraction unit 120. The manufacturing condition includes at least an environmental indicator of the candidate section, and may further include information relating to the price of the shoes, information relating to the lead time of the shoes, information relating to the accuracy of the shoes, and the like.

The environmental indicator is information relating to the impact of a candidate section manufacturing the product on the environment, and may be expressed, for example, as a score, rank, or level. For example, the impact on the environment may be expressed as a rank such as "S", "A", or "B". This allows the user to check how much the candidate section impacts the environment and how environmentally friendly the candidate section is.

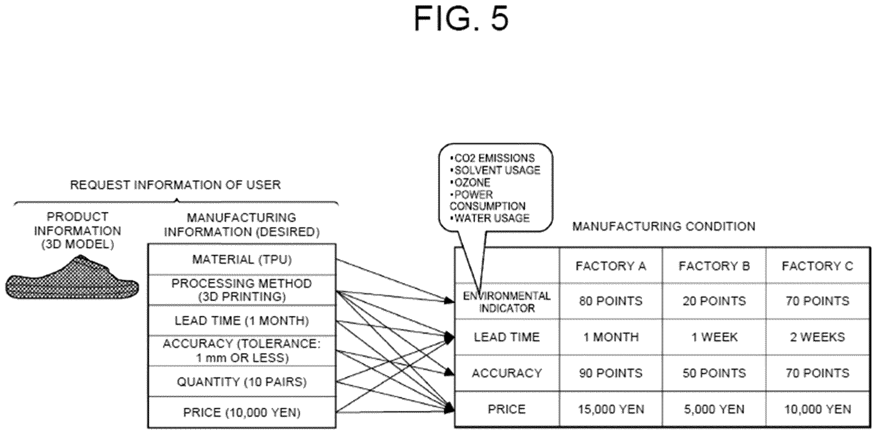

FIG. 5 shows examples of request information of a user and manufacturing conditions of factories extracted based on the request information. As shown in FIG. 5, in this example, Factory A, Factory B, and Factory C are extracted as factories capable of manufacturing at least the shoes specified by the user, and a manufacturing condition for each factory are generated. The manufacturing condition includes "environmental indicator", "lead time", "accuracy", and "price".

The "environmental indicator" may be calculated based on, for example, carbon dioxide emissions, solvent usage, impact on ozone layer depletion, power consumption, and water usage when the factory manufactures the shoes. Here, the "environmental indicators" are displayed as scores of "80 points", "20 points", and "70 points" for Factory A, Factory B, and Factory C, respectively, and is calculated using a preset formula based on carbon dioxide emissions, solvent usage, impact on ozone layer depletion, power consumption, water usage, etc.

The "environmental indicator" is affected by, for example, the "material" and "processing method" included in the manufacturing information of the request information of the user. Specifically, it is contemplated that an environmental indicator that is exemplarily carbon dioxide emissions during material production, or solvent usage changes depending on the "material". In addition, processing equipment may depend on the "processing method", and accordingly power consumption, water usage, and operating hours may change.

In addition, regarding carbon dioxide emissions, for example, if non-fossil energy is used based on the "non-fossil energy use environment" of the factory DB shown in FIG. 4, the carbon dioxide emissions for electricity used may be counted as zero, and the carbon dioxide emissions during transportation from the factory to the destination may be taken into account based on the "location" and "shipping method" of the factory DB.

The "lead time" is affected by, for example, the "processing method", "lead time", "accuracy", "quantity", and "price" included in the manufacturing information of the request information of the user. Specifically, a processing method requiring a long manufacturing time, a large quantity, and a lower price may prolong the lead time. In this example, the "lead times" are displayed as specific periods of "1 month", "1 week", and "2 weeks" for Factory A, Factory B, and Factory C, respectively. However, for example, if the "lead time" included in the manufacturing information of the request information of the user is met, "YES" may be displayed, and if not, "NO" may be displayed.

In addition, the "lead time" may be prolonged, for example, in the case of a busy period or holiday period, or no stock of materials, based on the "operation status", "location", and "stock of materials" in the factory DB shown in FIG. 4. If the factory is overseas, the "lead time" may be set by taking into account transportation time.

The "accuracy" is affected by, for example, the "processing method" and "accuracy" included in the manufacturing information of the request information of the user. Specifically, in the case of a high-accuracy processing method, the shape error of the manufactured shoes is small. Here, "accuracies" are displayed as scores of "90 points", "50 points", and "70 points" for Factory A, Factory B, and Factory C, respectively, and may be calculated using a preset formula. Alternatively, for example, if the "accuracy" included in the manufacturing information of the request information of the user is met, "YES" may be displayed, and if not, "NO" may be displayed.

Furthermore, the "accuracy" may be calculated based on, for example, the "processing equipment" and "manufacturing performance" in the factory DB shown in FIG. 4. For example, if the processing equipment is the latest model or has high performance, the "accuracy" may be calculated accordingly, or if multiple processes are performed, the "accuracy" may be calculated to be a better value. If multiple processes are performed to improve accuracy, a prolonged lead time or a higher price may be considered.

The "price" is affected by, for example, the "processing method", "lead time", "accuracy", "quantity", and "price" included in the manufacturing information of the request information of the user. Specifically, the price may be lower in a case where a processing method that reduces material waste is used, the price may be higher in the case of a shorter lead time because in such a case full operation of the factory is required, and the price per pair may be lower in the case of a large quantity. Here, the "prices" are displayed as specific prices of"15,000 yen", "5,000 yen", and "10,000 yen" for Factory A, Factory B, and Factory C, respectively. However, for example, if the "price" included in the manufacturing information of the request information of the user is met, "YES" may be displayed, and if not, "NO" may be displayed.

In addition, it may be considered that the "price" is high, for example, if the asset value or lease fee of the processing equipment is high, if it is a busy period, and if the wages of workers are high, based on the "processing equipment", "operation status", and "working condition" in the factory DB shown in FIG. 4.

In this manner, the manufacturing condition generation unit 130 calculates each item of the manufacturing condition using each item of the request information of the user and each item of the factory DB shown in FIG. 4, that affects each item of the manufacturing condition, but is not limited to the specific example described above. Each item of the manufacturing condition may be calculated by appropriately using or combining each item considered to have an effect on each item of the manufacturing condition.

Furthermore, although the "environmental indicator", "lead time", "accuracy", and "price" are calculated here as manufacturing conditions, the present invention is not limited thereto. Thus, only some of them may be calculated, or another item relating to the manufacturing condition of shoes may be added.

Returning to the explanation of FIG. 2, the output unit 140 outputs the manufacturing condition generated by the manufacturing condition generation unit 130. For example, the manufacturing condition may be transmitted to the user terminal 20 via the Internet and displayed on the screen of the user terminal 20.

The order reception unit 150 receives an order from the user based on the manufacturing condition. For example, if the user checks the manufacturing conditions displayed on the screen of the user terminal 20 and wishes to place an order with any one of Factory A, Factory B, and Factory C (for example, the manufacturing condition of Factory A), the user inputs (selects) on the user terminal 20 placing the order with Factory A, and transmits the order to the order support apparatus 100 via the Internet. Then, the order reception unit 150 of the order support apparatus 100 may receive the order and then place an order with Factory A.

As described above, the memory unit 160 stores, as a factory DB as shown in FIG. 4, items such as "non-fossil energy use environment", "processing equipment", "operation status", "location", "working condition", "stock of material", "shipping method", and "manufacturing performance" for each manufacturing section (factory).

The items stored in the memory unit 160 are not limited to these, and other data necessary for the processing of the order support apparatus 100 may be stored, and data may also be stored temporarily during the processing process.

### [Order Support Method]

Next, an order support method in which request information input by a user using the user terminal 20 is acquired, a manufacturing condition is generated and transmitted to the user terminal 20, and an order is then received from the user will be described in detail.

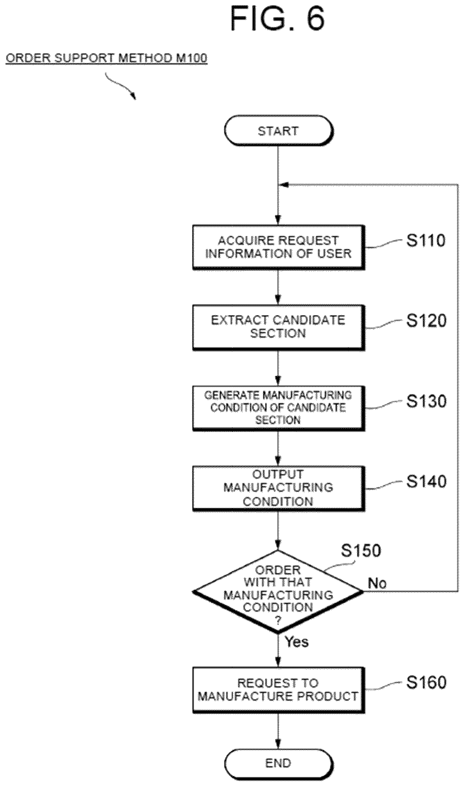

FIG. 6 is a flowchart illustrating an order support method M100 executed by the order support apparatus 100 according to the first embodiment of the present disclosure. As illustrated in FIG. 6, the order support method M100 includes steps S110 to S160, and each step is executed by a computer included in the order support apparatus 100 and a cloud server.

In step S110, the request information acquisition unit 110 acquires request information of a user relating to a product and manufacturing of the product (a request information acquisition step). In a specific example, the request information acquisition unit 110 acquires request information of the user from the user terminal 20. The request information of the user is product information of shoes and manufacturing information of the shoes as shown in FIG. 3.

In step S120, the candidate extraction unit 120 extracts, based on the request information acquired in step S110, candidate sections capable of manufacturing the product from pre-stored manufacturing sections (a candidate extraction step). In a specific example, the candidate extraction unit 120 refers to a factory DB and extracts, from pre-registered factories, factories capable of manufacturing the shoes desired by the user. The candidate extraction unit 120 may extract a factory that is capable of manufacturing at least the shoes desired by the user, but that do not completely satisfy the request information of the user.

In step S130, the manufacturing condition generation unit 130 generates manufacturing conditions of the candidate sections extracted in step S120 (a manufacturing condition generation step). In a specific example, the manufacturing condition generation unit 130 generates manufacturing conditions for Factory A, Factory B, and Factory C that are capable of manufacturing at least the shoes desired by the user, as shown in FIG. 5. The manufacturing condition includes an environmental indicator, information relating to the price of the shoes, information relating to the lead time of the shoes, and information relating to the accuracy of the shoes, and each item is affected by each item included in the request information of the user and is calculated based on each item in the factory DB as shown in FIG. 4.

In step S140, the output unit 140 outputs the manufacturing conditions generated in step S130 (an output step). In a specific example, the output unit 140 transmits, to the user terminal 20, the manufacturing conditions of Factory A, Factory B, and Factory C as shown in FIG. 5, to display the manufacturing conditions on the screen of the user terminal 20.

In step S150, if the order reception unit 150 receives an order from the user based on the manufacturing condition output in step S140 (an order reception step), the process proceeds to step S160 (Yes in step S150). In a specific example, on the user terminal 20, the user checks the manufacturing conditions of Factory A, Factory B, and Factory C as shown in FIG. 5 displayed on the screen, and if the user wishes to place an order with any one of the factories (for example, Factory A is selected), the user inputs and transmits the order to the order support apparatus 100 via the Internet. Then, the order reception unit 150 receives the order.

On the other hand, on the user terminal 20, the user checks the manufacturing conditions of Factory A, Factory B, and Factory C as shown in FIG. 5 displayed on the screen, and if the user does not wish to place an order at any of the factories, the process returns to step S110 ("No" at step S150). Then, the request information acquisition unit 110 acquires request information relating to desired shoes and manufacture of the shoes input again by the user (and then the same processing is repeated).

In step S160, the order support apparatus 100 requests manufacture of the product based on the order received in step S150 (a manufacturing request step). In a specific example, the order support apparatus 100 requests Factory A to manufacture the shoes under the manufacturing condition of Factory A shown in FIG. 5. Then, Factory A may manufacture the shoes based on the request from the order support apparatus 100 and deliver the shoes to the user.

### [Effects of First Embodiment]

According to the order support apparatus 100 and order support method M100 of the first embodiment of the present disclosure, the manufacturing condition generation unit 130 generates manufacturing conditions of Factory A, Factory B, and Factory C that are capable of manufacturing shoes based on request information of a user, and the output unit 140 outputs the manufacturing conditions to be displayed on the screen of the user terminal 20. The manufacturing conditions include environmental indicators, and thus the user can check the manufacturing conditions that include the environmental indicators. As a result, the user can order the shoes based on consideration of impact of manufacturing the shoes on the environment.

In the present embodiment, the environmental indicator is calculated based on carbon dioxide emissions, solvent usage, impact on ozone layer depletion, power consumption, water usage, and the like, as shown in FIG. 5, but is not limited thereto. For example, the environmental indicator may be obtained based on at least one or more of carbon dioxide emissions, impact on land and soil, fossil fuel usage, usage of minerals and metals, water usage, impact on freshwater ecosystem, nutrient emissions to freshwater system, impact on acidification, nutrient emissions to oceanic system, nutrient emissions to terrestrial ecosystem, photochemical ozone emissions, impact on respiratory system, radioactive substance emissions, carcinogen emissions, emissions of non-carcinogenic toxic substances and deleterious substances, and impact on ozone layer depletion, which are described in Environmental Footprint (EF) 3.0 as indices for evaluating environmental burden of a product or corporate activity.

### <Second Embodiment>

Next, in a second embodiment of the present disclosure, an order support apparatus including a recommendation determination unit that recommends a recommended section to a user, in addition to the order support apparatus 100 described in the first embodiment, will be described.

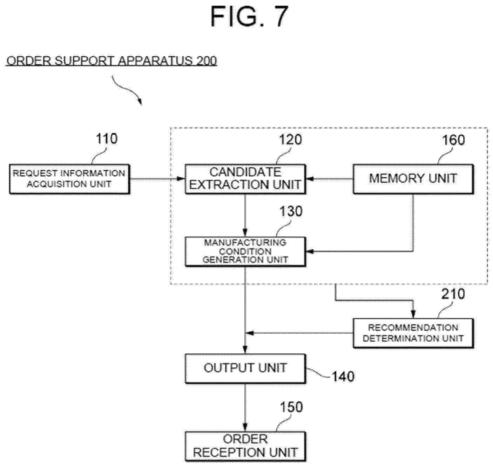

FIG. 7 is a functional block diagram illustrating functions of an order support apparatus 200 according to the second embodiment of the present disclosure. In FIG. 7, the same configurations as those of the order support apparatus 100 according to the first embodiment of the present disclosure illustrated in FIG. 2 are denoted by the same reference signs, and detailed description thereof will be omitted. In the present embodiment, configurations different from those of the first embodiment of the present disclosure will be mainly described.

As illustrated in FIG. 7, the order support apparatus 200 includes the request information acquisition unit 110, the candidate extraction unit 120, the manufacturing condition generation unit 130, the output unit 140, the order reception unit 150, the memory unit 160, and a recommendation determination unit 210.

The recommendation determination unit 210 acquires information relating to an item considered to be important by the user, and determines, based on the information relating to the item considered to be important by the user, a recommended section to be recommended to the user, and the recommended section is a section included in the candidate sections extracted by the candidate extraction unit 120. For example, as described in the first embodiment of the present disclosure, Factory A, Factory B, and Factory C are extracted as factories capable of manufacturing at least the shoes specified by the user, and a manufacturing condition of each factory is generated, and the recommendation determination unit 210 determines, based on information relating to the item considered to be important by the user, a factory to be recommended to the user which is one of Factory A, Factory B, and Factory C.

Here, information relating to an item considered to be important by the user may include, for example, information about which of the environmental indicator, lead time, accuracy, and price is considered to be important by the user, a priority order, and weighting according to the degree of importance (priority).

Information relating to an item considered to be important by the user may be stored in the memory unit 160 for each user as user definition, or may be input each time by the user using the user terminal 20 as request information of the user. The recommendation determination unit 210 acquires information relating to an item considered to be important by the user, which is stored as user definition or input each time.

If the user places importance on the environmental indicator, the recommendation determination unit 210 may determine that, for example, from among Factory A, Factory B, and Factory C shown in FIG. 5, Factory A, which has the best environmental indicator included in the manufacturing condition, is the factory to be recommended to the user.

Similarly, if the user places importance on lead time, accuracy, or price, the recommendation determination unit 210 may determine that the factory with the best score (evaluation) for each item included in the manufacturing condition is the factory to be recommended to the user.

Furthermore, if, in the information relating to the item considered to be important by the user, each item included in the manufacturing condition has a priority or is weighted, the recommendation determination unit 210 may determine a factory to be recommended to the user based on the priority or weighting.

For example, weights α, β, γ, and δ may be specified for the items of manufacturing condition, "environmental indicator", "lead time", "accuracy", and "price" shown in FIG. 5, respectively, and a recommendation score R may be calculated using the following equation. The coefficients α, β, γ, and δ may be freely specified by the user, or may be set in advance according to a specified priority order. Recommendation score R = α x (environmental indicator) + β x (lead time) + γ x (accuracy) + δ x (price)

Furthermore, when a user uses the user terminal 20 to input request information relating to desired shoes and manufacture of the shoes, an acceptable value may be input in addition to a value desired by the user. Specifically, if the user inputs 10,000 yen as a desired price for shoes and 13,000 yen as an acceptable (upper limit) price, the price score of the manufacturing conditions is standardized based on the desired price and the acceptable price, for example, using a normal distribution and a regression equation.

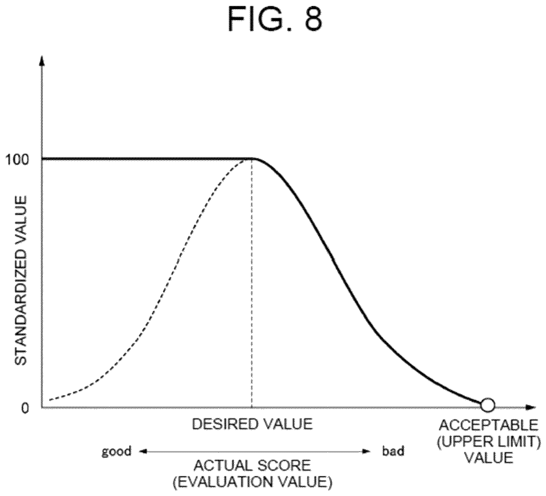

FIG. 8 illustrates conversion of an actual score (an evaluation value) of a manufacturing condition, into a standardized value, by using a normal distribution based on a desired value and an acceptable (upper limit) value. As illustrated in FIG. 8, the desired value is associated with "100" and the acceptable value (upper limit) is associated with "0". If the actual score (evaluation value) is better than the desired value, the actual score is converted to a standardized value of " 100" equivalent to that of the desired value. If the actual score (evaluation value) is worse than the desired value, the actual score is converted to a standardized value using a normal distribution (with "0" as the acceptable value (upper limit)). As a specific example, a case where a user inputs 10,000 yen as a desired price for shoes and 13,000 yen as an acceptable (upper limit) price is described. If the actual score (evaluation value) of the manufacturing condition is 10,000 yen or less, the actual score may be converted into a standardized value of " 100". If the actual score (evaluation value) is more than 10,000 yen, the actual score may be converted to a standardized value by using a normal distribution with "0" as the acceptable (upper limit) price, 13,000 yen.

Here, the price of a manufacturing condition is given as an example. Similarly, input of both an acceptable value and a desired value of "environmental indicator", "lead time", "accuracy", or the like may be received from the user, to convert an actual score (evaluation value) of a manufacturing condition into a standardized value.

In this manner, an actual score (an evaluation value) for each item of manufacturing condition is converted into a standardized value, and then the recommendation determination unit 210 can determine a factory to be recommended to the user. Thus, by reflecting an acceptable value of the user, it is possible to recommend a factory that is more suited to the user's preferences.

The output unit 140 outputs the manufacturing condition of the recommended section. For example, if the recommended factory is Factory A, the output unit 140 may display on the screen of the user terminal 20, in addition to the manufacturing conditions of Factory A, Factory B, and Factory C as shown in FIG. 5, an indication indicating that Factory A is the recommended factory. In addition, on the screen of the user terminal 20, only Factory A that is the recommended factory (the manufacturing condition of Factory A) may be displayed, or Factory A, Factory B, and Factory C may be displayed in order of recommendation.

### [Effects of Second Embodiment]

The order support apparatus 200 according to the second embodiment of the present disclosure includes, in addition to the order support apparatus 100 according to the first embodiment of the present disclosure, the recommendation determination unit 210. The recommendation determination unit 210 determines a factory to be recommended to a user based on information relating to an item considered to be important by the user. Thus, the user can easily identify a factory that matches the user's preferences and place an order for shoes with the factory.

### <Modified Examples>

In the first and second embodiments of the present disclosure, exemplary cases in which the user of the product ordering system 10 is a business entity such as a wholesaler or a retailer have been described, but the user is not limited to such a business entity and may be an individual.

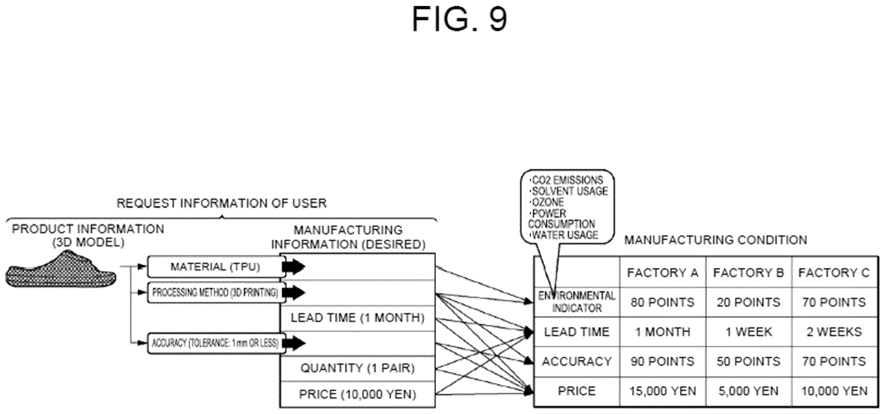

FIG. 9 shows an example of request information of a user input using the user terminal 20 in a case where the user is an individual. As shown in FIG. 9, the user may input product information of shoes by using the user terminal 20 to input a 3D model or a product number. In addition, the user may input manufacturing information of the shoes by using the user terminal 20 to input one month from the order date (lead time), one pair (quantity), and 10,000 yen (price) for the shoes. Here, unlike the case shown in FIG. 3 where the user is a business entity such as a wholesaler or a retailer, the TPU (material), 3D printing (processing method), and tolerance: 1 mm or less (accuracy) may be set automatically rather than being input by the user.

If the user is a business entity, the user can input request information such as materials, a processing method, and accuracy based on the user's professional knowledge, but if the user is an individual, such information may be automatically set based on, for example, the product information of the shoes.

### [Effects of Modified Example]

Even if there is an item in manufacturing information of shoes that a user cannot input due to lack of professional knowledge, the item is automatically set based on product information of the shoes. Thus, the order support apparatus can be used not only by users who are business entities such as wholesalers and retailers, but also by personal users.

### [Summary of Effects of Present Disclosure]

According to the present disclosure, when ordering a product which is an article of clothing, an article of footwear, or an accessory, manufacturing conditions of candidate sections capable of manufacturing a product based on request information of a user are generated and presented to the user. The manufacturing condition includes an environmental indicator, and thus the user can order the product based on consideration of the impact of manufacturing the product on the environment.

### [Aspects]

(1) An order support apparatus according to an aspect of the present disclosure is an order support apparatus that supports ordering a product being an article of clothing, an article of footwear, or an accessory. The order support apparatus includes, a request information acquisition unit that acquires request information of a user relating to the product and manufacture of the product, a candidate extraction unit that extracts, based on the request information, one or more candidate sections each having a capability of manufacturing the product, from one or more predetermined manufacturing sections, a manufacturing condition generation unit that generates a manufacturing condition of each of the one or more candidate sections, including an environmental indicator relating to an impact of the candidate section on environment, and an output unit that outputs the manufacturing condition. The order support apparatus of (1) allows a user to check manufacturing conditions that include the environmental indicator, and thus the user can order a product based on consideration of the impact of manufacturing the product on the environment.
(2) In the order support apparatus of (1), the environmental indicator may be obtained based on non-fossil energy use environment stored at least for each of the one or more manufacturing sections.
   According to the order support apparatus of (2), the environmental indicator is obtained based on the non-fossil energy usage environment. Thus, the impact of manufacturing the product on the environment can be appropriately reflected in the environmental indicator.
(3) In the order support apparatus of (1) or (2), the manufacturing condition may include, in addition to the environmental indicator, at least one of information relating to price, information relating to lead time, and information relating to accuracy.
   The order support apparatus of (3) allows a user to order the product based on consideration of information relating to price, information relating to lead time, and information relating to accuracy, as manufacturing conditions, in addition to the environmental indicator.
(4) In the order support apparatus of any one of (1) to (3), the manufacturing condition generation unit may generate the manufacturing condition for each of the one or more candidate sections based on at least one or more of information relating to processing equipment, information relating to operation status, information relating to location, information relating to a working condition, information relating to stock of material, information relating to shipping method, and information relating to manufacturing performance stored for each of the one or more manufacturing sections.
   According to the order support apparatus of (4), the manufacturing condition generation unit can generate manufacturing conditions of the candidate sections based on various information.
(5) The order support apparatus of any one of (1) to (4) may further include a recommendation determination unit that acquires information relating to an item considered to be important by the user, and determines, based on the information relating to the item considered to be important by the user, a recommended section to be recommended to the user, the recommended section may be one of the one or more candidate sections, and the output unit may output the manufacturing condition of the recommended section.
   According to the order support apparatus of (5), the recommendation determination unit determines a recommended section based on information relating to the item considered to be important by the user. Thus, the user can easily check the manufacturing section that is in line with the item considered to be important by the user.
(6) In the order support apparatus of (5), the information relating to the item considered to be important by the user may be obtained based on user definition stored for each user.
   The order support apparatus of (6) makes it possible to appropriately use, for each user, information relating to an item considered to be important by the user.
(7) In the order support apparatus of (5), the information relating to the item considered to be important by the user may be obtained based on information included in the request information input by the user.
   The order support apparatus of (7) allows a user to input information relating to an item considered to be important by the user each time the user orders a product.
(8) In the order support apparatus of any one of (1) to (7), the environmental indicator may be obtained based on at least one or more of carbon dioxide emissions, impact on land and soil, fossil fuel usage, usage of minerals and metals, water usage, impact on freshwater ecosystem, nutrient emissions to freshwater system, impact on acidification, nutrient emissions to oceanic system, nutrient emissions to terrestrial ecosystem, photochemical ozone emissions, impact on respiratory system, radioactive substance emissions, carcinogen emissions, emissions of non-carcinogenic toxic substances and deleterious substances, and impact on ozone layer depletion, when the product is manufactured.
   The order support apparatus of (8) makes it possible to obtain the environmental indicators based on various items.
(9) An order support method according to another aspect of the present disclosure is an order support method executed by an order support apparatus that supports ordering a product being an article of clothing, an article of footwear, or an accessory. The order support method includes, a request information acquisition step of acquiring request information of a user relating to the product and manufacture of the product, a candidate extraction step of extracting, based on the request information, one or more candidate sections each having a capability of manufacturing the product, from one or more predetermined manufacturing sections, a manufacturing condition generation step of generating a manufacturing condition of each of the one or more candidate sections, including an environmental indicator relating to an impact of the candidate section on environment, and an output step of outputting the manufacturing condition.

The order support method of (9) allows a user to check manufacturing conditions that include the environmental indicator, and thus the user can order a product based on consideration of the impact of manufacturing the product on the environment.

The above-described embodiments are intended to facilitate understanding of the present disclosure, and are not intended to limit the present disclosure. The elements of the embodiments as well as arrangement, materials, conditions, shapes, sizes, etc. of the elements are not limited to those exemplified and can be changed as appropriate. Furthermore, configurations in different embodiments may be partially replaced or combined with each other.

### [Industrial Applicability]

The present disclosure is useful, for example, in a system that supports ordering products such as clothing, footwear, and accessories.

## Claims

1. An order support apparatus (100) that supports ordering a product being an article of clothing, an article of footwear, or an accessory, the order support apparatus (100) comprising:
a request information acquisition unit (110) that acquires request information of a user, the request information relating to the product and manufacture of the product;
a candidate extraction unit (120) that extracts, based on the request information, one or more candidate sections each having a capability of manufacturing the product, from one or more predetermined manufacturing sections;
a manufacturing condition generation unit (130) that generates a manufacturing condition of each of the one or more candidate sections, the manufacturing condition including an environmental indicator relating to an impact of the candidate section on environment; and
an output unit (140) that outputs the manufacturing condition.

2. The order support apparatus according to claim 1, wherein the environmental indicator is obtained based on non-fossil energy use environment stored at least for each of the one or more manufacturing sections.

3. The order support apparatus according to claim 1, wherein the manufacturing condition includes, in addition to the environmental indicator, at least one of information relating to price, information relating to lead time, and information relating to accuracy.

4. The order support apparatus according to claim 3, wherein the manufacturing condition generation unit generates the manufacturing condition for each of the one or more candidate sections based on at least one or more of information relating to processing equipment, information relating to operation status, information relating to location, information relating to a working condition, information relating to stock of material, information relating to shipping method, and information relating to manufacturing performance stored for each of the one or more manufacturing sections.

5. The order support apparatus according to claim 3, further comprising a recommendation determination unit that acquires information relating to an item considered to be important by the user, and determines, based on the information relating to the item considered to be important by the user, a recommended section to be recommended to the user, the recommended section being one of the one or more candidate sections, wherein
the output unit outputs the manufacturing condition of the recommended section.

6. The order support apparatus according to claim 5, wherein the information relating to the item considered to be important by the user is obtained based on user definition stored for each user.

7. The order support apparatus according to claim 5, wherein the information relating to the item considered to be important by the user is obtained based on information included in the request information input by the user.

8. The order support apparatus according to claim 1, wherein the environmental indicator is obtained based on at least one or more of carbon dioxide emissions, impact on land and soil, fossil fuel usage, usage of minerals and metals, water usage, impact on freshwater ecosystem, nutrient emissions to freshwater system, impact on acidification, nutrient emissions to oceanic system, nutrient emissions to terrestrial ecosystem, photochemical ozone emissions, impact on respiratory system, radioactive substance emissions, carcinogen emissions, emissions of non-carcinogenic toxic substances and deleterious substances, and impact on ozone layer depletion, when the product is manufactured.

9. An order support method executed by an order support apparatus that supports ordering a product being an article of clothing, an article of footwear, or an accessory, the order support method comprising:
acquiring request information of a user, the request information relating to the product and manufacture of the product;
extracting, based on the request information, one or more candidate sections each having a capability of manufacturing the product, from one or more predetermined manufacturing sections;
generating a manufacturing condition of each of the one or more candidate sections, the manufacturing condition including an environmental indicator relating to an impact of the candidate section on environment; and
outputting the manufacturing condition.
